# EUROPÄISCHE PATENTSCHRIFT

(11) **EP 3 585 712 B1**
(45) Veröffentlichungstag und Bekanntmachung des Hinweises auf die Patenterteilung: **23.11.2022**
(21) Anmeldenummer: 18706738.4
(22) Anmeldetag: 22.02.2018
(51) Int. Cl.: B65G 47/51

(54) **KETTENPUFFER**
CHAIN BUFFER
DISPOSITIF DE STOCKAGE INTERMÉDIAIRE DE CHAÎNE

(30) Priorität: 23.02.2017 CH 2122017
(43) Veröffentlichungstag der Anmeldung: 01.01.2020
(73) Patentinhaber: Rotzinger AG, 4303 Kaiseraugst (CH)
(72) Erfinder: PHILIPP, Kurt, 79639 Grenzach-Wyhlen (DE)
(74) Vertreter: Braun, André jr.
(86) Internationale Anmeldenummer: PCT/EP2018/054355
(87) Internationale Veröffentlichungsnummer: WO 2018/153965

(56) Entgegenhaltungen:
- EP-A1- 1 275 603
- EP-A1- 1 845 039
- EP-A1- 2 184 240
- WO-A1-2012/035280
- CA-A1- 2 364 216

## Beschreibung

Die Erfindung betrifft eine Puffereinrichtung zur vorübergehenden Aufnahme von Produkten aus einem Produktstrom im Fall einer den Produktstrom stromabwärts behindernden Störung und zur Abgabe der aufgenommenen Produkte nach Behebung der Störung.

Puffereinrichtungen oder kurz Puffer, die häufig auch als Produktflussregulatoren oder Zwischenspeicher bezeichnet werden, sind in vielfältiger Form bekannt.

Stückgüter (z. B. Lebensmittel wie Schokoriegel oder Biskuit) sind oft verpackt in einem Kunststoff-Tray, Schlauchpack oder Karton. In einer Lebensmittel-Produktionslinie sollten die fertig produzierten unverpackten Lebensmittel-Stückgüter so schnell wie möglich verpackt werden. Hierfür werden diese zur Verpackungslinie gefördert. Die Verpackungslinie besteht zumeist aus mehreren Maschinen die in Reihe geschaltet sind, z. B. eine Schlauchpackmaschine für die Erstverpackung, dann eine Multipackmaschine für die Zweitverpackung, ein Kartonierer und zuletzt ein Palettierer.

Jede dieser in Reihe geschalteten Maschinen ist störungsbehaftet. Um zu vermeiden, dass bei einem Stopp einer Maschine die gesamte Linie gestoppt werden muss und dadurch Verluste entstehen und die Effizienz der Linie sinkt werden Puffereinrichtungen in die Linie integriert werden. Diese Puffereinrichtungen nehmen den Fluss der Stückgütern für eine gewisse Zeit auf. Die Puffereinrichtungen sind in den Produktfluss eingeschlauft, nehmen an deren Einlauf die Stückgüter synchronisiert auf, und können diese flexibel für eine gewisse Zeit speichern. Nach Beheben einer Störung werden die Stückgüter in Abhängigkeit vom Pufferfüllgrad wieder mit einer höheren Geschwindigkeit an die nachgeschalteten Maschinen abgegeben, um den Inhalt der Puffereinrichtung abzubauen und einer Überfüllung des Puffers entgegenzuwirken.

Aus der EP 2 184 240 ist eine als Puffereinrichtung geeignete Bewegungsvorrichtung mit einem Endlosband gemäß dem Oberbegriff des Anspruchs 1 bekannt, in welcher das Band in einer Arbeitsebene und in einer Reserveebene um horizontale Leiträder verlaufende Schlaufen durchläuft, wobei die Schlaufenlängen relativ zueinander verlängert oder verkürzt werden können und die Leiträder abwechselnd ortsfest und horizontal verschiebbar angeordnet sind. Die jeweils beweglichen Leiträder sind mittels eines Führungsriemens miteinander gekoppelt, wobei sich mehrere Führungsriemen synchron bewegen sollen. Für letzteres zeigt das Dokument keine Lösung.

Der Erfindung liegt die Aufgabe zugrunde, eine Puffereinrichtung der eingangs genannten Art vorzuschlagen, deren Speicherkapazität unmittelbar dynamisch auf einen auftretenden Bedarf reagieren kann, indem eine koordinierte Veränderung der Schlaufenlängen erzielt wird. Erfindungsgemäss wird dies durch die kennzeichnenden Merkmale des Anspruchs 1 erreicht.

Für den Zweck dieser Beschreibung werden die folgenden Begriffe wie angegeben speziell definiert:
Eine **"Plattenkette"** ist eine Gliederkette mit dreidimensional relativ zueinander beweglichen Kettengliedern, die zumeist aus gespritztem Kunststoff bestehen. Die Oberseite dieser Kettenglieder ist flach ausgeformt und dient als Auflagefläche für zu transportierende Stückgüter. Diese Plattenketten sind in vielseitiger Ausprägung am Markt verfügbar.

Die Seite der Puffereinrichtung, auf der die Produkte ein- und auslaufen, wird als "**Vorderseite"** oder mit **"vorne",** die gegenüberliegende Seite als **"Rückseite"** oder **"hinten"** bezeichnet.

Als **"Schlaufe"** wird eine der Verlängerung der Kettenlänge dienende, zur Rückseite gerichtete Windung der Plattenkette bezeichnet, an deren hinterem Ende eine Umlenkung erfolgt

Die vorliegende Puffereinrichtung dient dem Transport von zumeist verpackten Stückgütern. Sie wird zumeist im Verpackungsbereich in der Lebensmittel -und Pharmabranche eingesetzt. Eine Durchmischung der Produkte findet nicht statt, da die vorgeschlagene Puffereinrichtung nach dem First-in-First-out - Prinzip arbeitet.

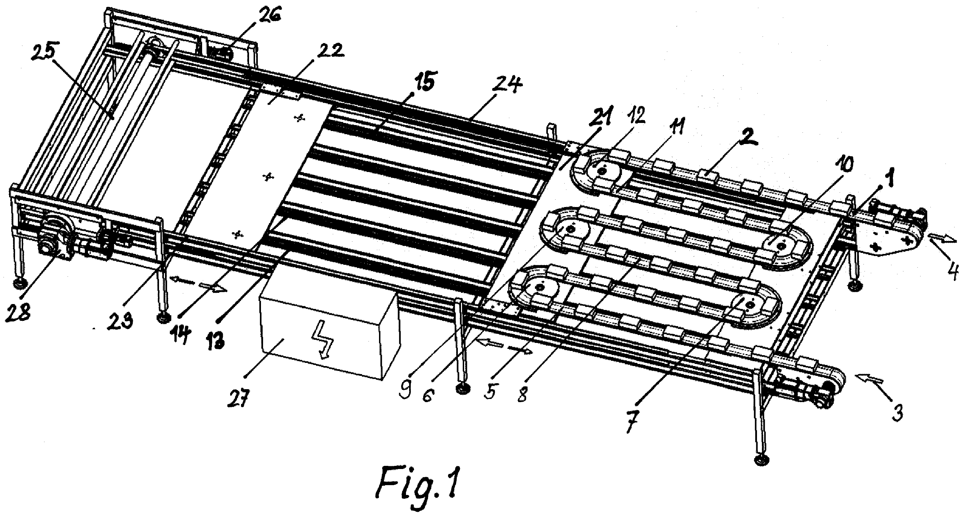

Im Folgenden wird anhand der beiliegenden Zeichnungen ein Ausführungsbeispiel der erfindungsgemässen Puffereinrichtung beschrieben. Es zeigen
- Fig. 1: eine perspektivische Darstellung einer erfindungsgemässen Puffereinrichtung
- Fig. 2: eine perspektivische Darstellung der in Fig. 1 gezeigten Puffereinrichtung unter einem anderen Blickwinkel

Eine Plattenkette 1 dient zum Fördern von Stückgütern 2 von einem Einlauf 3 zu einem Auslauf 4. Die Plattenkette ist endlos, wobei ihr dem Fördern der Stückgüter dienender Anteil in einer oberen Ebene verläuft, während ihr übriger Anteil in einer darunter angeordneten Ebene verläuft.

Die vorliegende Puffereinrichtung besitzt in der oberen, der Stückgutförderung dienenden Ebene ersichtlich drei Schlaufen, die der Verlängerung des Wegs der Stückgüter vom Einlauf zum Auslauf dienen: Eine erste Schlaufe 5 verläuft gerade vom Einlauf zu einer hinteren Umlenkung 5 und parallel wieder nach vorne zu einer Umlenkung 7 an der Vorderseite des Puffers; eine anschliessende zweite Schlaufe 8 verläuft von der vorderen Umlenkung 7 nach hinten zu einer zweiten hinteren Umlenkung 6 und parallel nach vorne zu einer zweiten vorderen Umlenkung 10; eine dritte Schlaufe 11 verläuft nach hinten und über eine dritte hintere Umlenkung 12 nach vorne zum Auslauf.

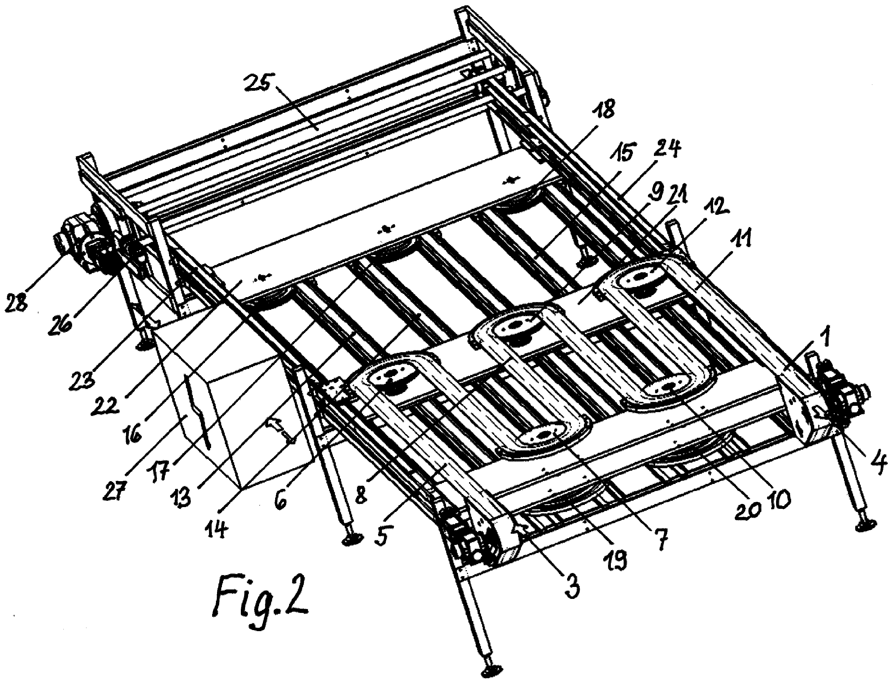

In der unteren Ebene verläuft die Plattenkette ebenfalls in drei parallelen Schlaufen 13, 14, 15, die jeweils im hinteren Bereich des Puffers in gleicher Weise wie die Schlaufen der oberen Ebene um Umlenkungen 16, 17, 18 geführt werden (Fig. 2). Ebenso wie in der oberen Ebene befinden sich in der unteren Ebene zwei vordere Umlenkungen 19, 20 zwischen den Schlaufen, die ebenfalls in Fig. 2 ersichtlich sind. In den Schlaufen der unteren Ebene läuft die Kette in der den Schlaufen der oberen Ebene entgegengesetzten Richtung. Es versteht sich ausserdem, dass in der unteren Ebene die Kette mit ihren Auflageflächen nach unten gerichtet verläuft und demzufolge natürlich leer ist.

Beim Einlauf wird die Plattenkette über ein angetriebenes verzahntes Kettenrad von der unteren Ebene zur oberen Ebene vertikal umgelenkt. Dementsprechend wird beim Auslauf die Kette über ein angetriebenes verzahntes Kettenrad zur unteren Ebene umgelenkt. Die Antriebe der Kettenräder sind handelsübliche Servomotoren mit einem geeigneten Getriebe.

Die horizontalen Umlenkungen sind als flach liegende gelagerte Räder ausgebildet. In der oberen Ebene sind die beiden horizontalen Umlenkräder 7, 10 zwischen den Schlaufen auf der Vorderseite des Puffers ortsfest angeordnet, während die drei horizontalen Umlenkräder 6, 9, 12 für die jeweils hintere Umlenkung der Schlaufen auf einem horizontal verschiebbaren Schlitten 21 angeordnet sind. In gleicher Weise sind auch auf der unteren Ebene die vorderen Umlenkräder 19, 20 ortsfest, und zwar vertikal unter den entsprechenden Umlenkrädern der oberen Ebene, angeordnet, während die hinteren Umlenkräder auf einem horizontal verschiebbaren Schlitten 22 angeordnet sind. Durch die Verschiebung des Schlittens 21 der oberen, d.h. der Förderebene, nach hinten werden die Schlaufen 5, 8, 11 verlängert und damit die Förderlänge zwischen Einlauf und Auslauf vergrössert. Dadurch wird die Speicherkapazität der Förderstrecke erhöht. Umgekehrt werden durch Verschiebung des Schlittens 21 nach vorne die Schlaufenlänge und damit die Förderlänge verkürzt, also die Speicherkapazität verringert.

Die Verlängerung oder Verkürzung der Schlaufen der oberen, d.h. der Förderebene ergibt sich als Folge einer Geschwindigkeitsdifferenz zwischen Einlauf- und Auslaufantrieb. Sind Einlaufgeschwindigkeit und Auslaufgeschwindigkeit gleich gross, so findet keine Änderung der Schlaufenlängen statt. Ist wegen einer stromabwärts aufgetretenen Störung die Einlaufgeschwindigkeit grösser als die Auslaufgeschwindigkeit, so füllt sich der Kettenpuffer mit Produkt, indem die oben liegenden Kettenschlaufen verlängert werden. Wenn umgekehrt die Auslaufgeschwindigkeit grösser ist, so entleert sich der Puffer und die Kettenschlaufen verkürzen sich entsprechend. Ist der Puffer leer, so sind die Kettenschlaufen maximal verkürzt; ist der Puffer voll, sind die Kettenschlaufen maximal verlängert.

Wenn die Schlaufenlänge auf der oberen Ebene verändert wird, muss gleichzeitig die Schlaufenlänge der unteren Ebene gegenläufig verändert werden, d.h. bei leerem Puffer haben die Schlaufen der unteren Ebene ihre maximale Länge und der Schlitten 22 befindet sich am hinteren Ende, während bei vollem Puffer die unteren Schlaufen ihre minimale Länge haben mit dem Schlitten in seiner vordersten Position. Die unten liegenden Kettenschlaufen dienen somit gewissermassen als Kettenvorrat.

Die beiden verschiebbaren Schlitten 21, 22, auf denen sich die horizontalen Umlenkungen der Kettenschlaufen befinden, sind mit zwei beidseitig angeordneten Zahnriemen 23, 24 miteinander gekoppelt. Anstelle von Zahnriemen können auch Ketten, Drahtseile etc. eingesetzt werden. Das Zahnriemenpaar wird, wie aus Fig. 3 ersichtlich, auf der Rückseite des Puffers über eine Welle 25 umgelenkt. Diese Umlenkwelle ist beidseitig mittels servogetriebenen Gewindespindeln 26 horizontal verschiebbar. Somit können die in den beiden Ebenen liegenden Kettenschlaufen über die mit den Zahnriemen gekoppelten Schlitten definiert gespannt werden.

Anstelle der vorstehend beschriebenen Ausführungsform mit drei parallelen Schlaufen sind natürlich auch Ausführungen mit nur einer oder zwei Schlaufen, andererseits aber auch solche mit vier und mehr Schlaufen möglich. Vor allem wenn der Puffer über eine grosse Kettenlänge verfügt, ist eine definierte und optimale Vorspannung der Kettenschlaufen erforderlich. Eine Steuereinheit 27 kann das induzierte Drehmoment der beiden paarweise angeordneten Servospindeln so dosieren, dass immer eine optimale Vorspannung der beiden Kettenschlaufen vorhanden ist.

Je länger die Kette ist, desto grösser ist die Pufferkapazität. Eine längere Kette hat auch eine grössere Längenausdehnung während des Betriebs. Andererseits ist der erforderliche Spannweg durch die Anzahl der oben und unten liegenden Kettenschlaufen um die Schlaufenzahl reduziert. Das ist ein Vorteil, der massgeblich die Gesamtlänge des Kettenpuffers reduziert.

Ein weiterer Vorteil der paarweise aussenliegenden Anordnung der Zahnriemen besteht darin, dass mögliche Verkantungskräfte in den ebenfalls aussenliegenden Schlittenführungen praktisch egalisiert werden.

Bei grösseren Puffern kann die beschriebene Spannwelle auch mit einem zusätzlichen Servomotor als Hilfsantrieb 28 ausgestattet werden. Dieser Antrieb treibt dann über die beiden paarweise angeordneten Zahnriemen, überlagert die beiden Schlitten an. Damit wird es möglich, die Kräfte in der Förderkette zu reduzieren, weil der Kraftanteil für den Vortrieb der beiden Schlitten wegfällt.

Ein weiterer Vorteil des zusätzlichen Hilfsantriebs besteht darin, dass die Steuereinheit diesen Antrieb mit Einlaufantrieb und Auslaufantrieb inkrementell zu synchronisieren, so dass dieser in Abhängigkeit des Füllgrads bei Befüllung oder Entleerung des Puffers die Förderkette kräftemässig entlastet. Dadurch können grosse Pufferkapazitäten mit entsprechend grossen Kettenlängen realisiert werden.

Durch die Mehrschlaufigkeit einerseits und die Anordnung der Kettenschlaufen in zwei übereinander liegenden Ebenen andererseits, kann eine grosse Pufferkapazität bei einer reduzierten Länge ermöglicht werden. Die Anzahl der Kettenschlaufen ist, wie erwähnt, beliebig und richtet sich massgeblich nach der zur Verfügung stehenden Breite. Die Durchmesser der horizontalen Kettenumlenkungen richten sich nach Längen- und Breitenabmessungen der Produkte. Der Nutzungsgrad des vorgeschlagenen Kettenpuffers ist mit bis zu 90% ausserordentlich hoch. Der Nutzungsgrad ist der Quotient aus nutzbarer Kettenlänge bezogen auf deren Endloslänge. Die nutzbare Kettenlänge ist hierbei der als Puffer nutzbare Anteil der Endloslänge. Beispielsweise benötigt ein solcher Puffer für 120m nutzbarer Kettenlänge nur eine Endloslänge von 132m. Vergleichbare Puffer aus dem Stand der Technik haben einen wesentlich tieferen Nutzungsgrad.

Durch die Mehrschlaufigkeit ergibt sich ausserdem eine flache Bauform des Puffers. Es können somit zwei oder mehrere Puffer vertikal übereinander gestapelt werden. Somit können bei gegebener Fläche Puffer mehrerer Linien platzsparend übereinander angeordnet werden. Ausserdem ist es möglich bei gegebener Fläche die Pufferkapazität durch mehrere übereinander angeordneter Puffer zu multiplizieren, in dem deren Aus- und Einläufe fördertechnisch miteinander verbunden werden.

## Patentansprüche

1. Puffereinrichtung zur vorübergehenden Aufnahme von Produkten (2) aus einem Produktstrom im Fall einer den Produktstrom stromabwärts behindernden Störung und zur Abgabe der aufgenommenen Produkte nach Behebung der Störung mit einer endlosen Plattenkette, die jeweils mehrere in einer oberen und einer unteren Ebene durch horizontale Umlenkungen (6,7,9,10,12; 16,17,18,19,20) gebildete Schlaufen (5, 8,11; 13,14,15)durchläuft, wobei die Umlenkungen abwechselnd ortsfest und horizontal verschiebbar angeordnet sind, derart, dass die Schlaufenlängen veränderbar sind, **dadurch gekennzeichnet, dass** die verschiebbaren horizontalen Umlenkungen in der oberen und der unteren Ebene auf je einem horizontal verschiebbaren Schlitten (21, 22) angeordnet sind und die beiden Schlitten miteinander gekoppelt sind, derart, dass die horizontalen Verschiebungen gegenläufig sind.

2. Puffereinrichtung nach Anspruch 1, **dadurch gekennzeichnet, dass** die in der oberen Ebene verlaufenden Kettenschlaufen der Produktförderung und die Kettenschlaufen in der unteren Ebene als Kettenvorrat dienen.

3. Puffereinrichtung nach Anspruch 1, **dadurch gekennzeichnet, dass** der in der oberen Ebene verlaufende Kettenteil mit dem in der unteren Ebene Kettenteil durch angetriebene vertikale Umlenkungen verbunden ist.

4. Puffereinrichtung nach Anspruch 3, **dadurch gekennzeichnet, dass** ein Produkteinlauf (3) und ein Produktauslauf (4) vorhanden sind, und sich die vertikalen Umlenkungen bei diesen befinden.

5. Puffereinrichtung nach Anspruch 1, **dadurch gekennzeichnet, dass** zur Kopplung der Schlitten beidseits parallel angeordnete und an der der Ein- und Auslaufseite abgewandten Seite des Puffers umgelenkte Züge (23,24) vorhanden sind.

6. Puffereinrichtung nach Anspruch 5, **gekennzeichnet durch** an der Umlenkung der Züge wirkende Spannmittel zum Spannen der Plattenkette.

7. Puffereinrichtung nach Anspruch 5, **gekennzeichnet durch** einen Antrieb(28) der Umlenkung zur Unterstützung der Verlängerung bzw. Verkürzung der Kettenschlaufen.

## Claims

1. Buffer device for temporarily receiving products (2) from a product flow in the case of a fault downstream of the product flow and for delivering the received products after the malfunction has been remedied, comprising an endless flat-top chain which passes through a plurality of loops (5, 8, 11; 13, 14, 15) that are formed in an upper and a lower plane by horizontal deflectors (6, 7, 9, 10, 12; 16, 17, 18, 19, 20), the deflectors being arranged so as to be alternately stationary and horizontally movable, such that the loop lengths can be changed, **characterized in that** the movable horizontal deflectors in the upper and the lower plane are arranged on respective horizontally movable carriages (21, 22), and the two carriages are coupled to one another in such a way that the horizontal movements are in opposite directions.

2. Buffer device according to claim 1, **characterized in that** the chain loops which run in the upper plane are used for conveying products, and the chain loops in the lower plane are used as a chain store.

3. Buffer device according to claim 1, **characterized in that** the part of the chain which runs in the upper plane is connected to the part of the chain in the lower plane by driven vertical deflectors.

4. Buffer device according to claim 3, **characterized in that** a product inlet (3) and a product outlet (4) are provided, and the vertical deflectors are located at said inlet and outlet.

5. Buffer device according to claim 1, **characterized in that** traction elements (23, 24) which are arranged in parallel on either side of the carriages and deflected on the side of the buffer facing away from the inlet and outlet sides are provided for coupling the carriages.

6. Buffer device according to claim 5, **characterized by** tension means which act on the deflector of the traction elements for tensioning the flat-top chain.

7. Buffer device according to claim 5, **characterized by** a drive (28) of the deflector for assisting in the lengthening or shortening of the chain loops.

## Revendications

1. Dispositif tampon pour la réception temporaire de produits (2) provenant d'un flux de produits en cas de perturbation faisant obstacle au flux de produits en aval et pour la distribution des produits reçus après la suppression de la perturbation, comportant une chaîne à palettes sans fin, laquelle traverse respectivement plusieurs boucles (5, 8, 11 ; 13, 14, 15) formées par des déviations horizontales (6, 7, 9, 10, 12 ; 16, 17, 18, 19, 20) dans un plan supérieur et un plan inférieur, les déviations étant disposées alternativement de manière fixe et de manière à pouvoir être déplacées horizontalement de telle sorte que les longueurs de boucles sont modifiables, **caractérisé en ce que** les déviations horizontales pouvant être déplacées sont disposées dans les plans supérieur et inférieur sur respectivement un coulisseau (21, 22) pouvant être déplacé horizontalement et les deux coulisseaux sont couplés l'un à l'autre de telle sorte que les déplacements horizontaux sont opposés.

2. Dispositif tampon selon la revendication 1, **caractérisé en ce que** les boucles de chaîne du transport de produits s'étendant dans le plan supérieur et les boucles de chaîne dans le plan inférieur servent de réserve de chaîne.

3. Dispositif tampon selon la revendication 1, **caractérisé en ce que** la partie de chaîne s'étendant dans le plan supérieur est reliée à la partie de chaîne dans le plan inférieur par des déviations verticales entraînées.

4. Dispositif tampon selon la revendication 3, **caractérisé en ce qu'une** entrée de produits (3) et une sortie de produits (4) sont prévues, et les déviations verticales se trouvent à proximité de celles-ci.

5. Dispositif tampon selon la revendication 1, **caractérisé en ce que,** pour le couplage des coulisseaux, des trains (23, 24) disposés parallèlement des deux côtés et déviés sur le côté du tampon opposé au côté entrée et au côté sortie sont prévus.

6. Dispositif tampon selon la revendication 5, **caractérisé par** des moyens de serrage agissant sur la déviation des trains et permettant de serrer la chaîne à palettes.

7. Dispositif tampon selon la revendication 5, **caractérisé par** un entraînement (28) de la déviation permettant d'aider le prolongement ou le raccourcissement des boucles de chaîne.
